# EUROPEAN PATENT APPLICATION

(11) **EP 4 783 092 A1**
(43) Date of publication of application: **29.07.2026**
(21) Application number: 26153181.8
(22) Date of filing: 21.01.2026
(51) Int. Cl.: G06Q 20/02, G06Q 20/40

(54) **AUTHENTICATION OPTIMIZATION SERVICE FOR AUTHENTICATION SECURITY PROTOCOLS**

(30) Priority: 27.01.2025 US 202519037431
(71) Applicant: Worldpay, LLC, Symmes Township, OH 45249 (US)
(72) Inventor: KANAKAVALLI, Rakesh Kumar, Liberty Lake, 99019 (US); THAKKAR, Sunny Narendra, Liberty Lake, 99019 (US); ERDBRINK, Christiaan Dirk, Liberty Lake, 99019 (US); HONG, Tao, Liberty Lake, 99019 (US); ZHANG, Yang, Liberty Lake, 99019 (US); FARMER, Christopher, Liberty Lake, 99019 (US); WINSTEL, John Robert, Liberty Lake, 99019 (US)
(74) Representative: Patel, Nikesh

(57) **Abstract**

In some embodiments, a method includes extracting one or more request features from request data for a transaction, generating one or more derived features based on the request features, encoding the one or more request features and the one or more derived features into a format for a security decision model, and generating, using the security decision model, a security protocol decision based on model features including the one or more request features and the one or more derived features.

## Description

### BACKGROUND

### Field of the Various Embodiments

The various embodiments relate generally to computing devices and, more specifically, to authentication optimization services for authentication security protocols.

### Description of the Related Art

Electronic transaction technologies have advanced to permit merchants and consumers to conveniently transact business over the Internet. However, the proliferation of online payment transactions has made sensitive and secure electronic data to become potentially vulnerable to data breaches (e.g., card-not-present (CNP) fraud). In a drive to reduce such data breaches, regulatory bodies and payment schemes have mandated various authentication requirements (e.g., Strong Customer Authentication (SCA)). Consequently, card schemes have adopted authentication security protocols such as Three-Domain Secure 1 (3DS1) and Three-Domain Secure specification (3DS2). 3DS1 requires shoppers to enter payment credentials (e.g., a password or a passcode) during electronic payment transactions, resulting in friction during the checkout process. Under 3DS2, enhanced authentication methods (e.g., multi-factor authentication, risk-based authentication, and frictionless authentication) may be performed by using additional consumer transaction data obtained during the checkout process.

One drawback of such techniques is that authentication security protocols involve additional user interaction and result in transaction abandonment. This additional step in the transaction process causes a poor customer experience. Users in some geographical regions regularly fail to complete the step-up authentication requirements (e.g., challenges) such as password entry, multi-factor authentication, and/or the like. Such failures can result in transaction abandonment by the user and reduced user retention for merchants. Another drawback of implementing certain authentication security protocols is that while implementation of authentication security protocols is mandated in some regions, issuer use and acceptance of authentication is not standardized. For example, in non-mandated regions, issuers use customized preferences for authentication security protocol implementation. In some cases, authentication security protocols often provide for frictionless transactions that do not involve step-up authentication. However, frictionless transactions regularly result in transaction failures for merchants, because issuers regularly reject frictionless transactions requested or implemented using authentication security protocols. In regions where authentication security protocols are not mandated, both frictionless (e.g., no challenge) and challenge-based authentication paths result in rejections from issuers. These existing techniques can result in transaction failures and reduced user retention. Where users persist, the repeated transaction requests utilize additional hardware resources including compute resources, network resources, and energy expenditure. Additionally, certain merchants or issuers have may certain rules that are rigid when enforcing these security protocols. Some of these rules may not be changed or may cause inefficiencies when enabled.

As the foregoing indicates, what is needed are more effective techniques for merchants to manage use of authentication security protocols.

### SUMMARY

One embodiment sets forth one or more non-transitory computer-readable media storing program instructions that, when executed by one or more processors, cause the one or more processors to perform a method. The method includes extracting one or more request features from request data for a transaction, generating one or more derived features based on the request features, encoding the one or more request features and the one or more derived features into a format for a security decision model, and generating, using the security decision model, a security protocol decision based on model features including the one or more request features and the one or more derived features.

Further embodiments provide, among other things, a method and a system for implementing the method described above.

At least one technical advantage of the disclosed techniques relative to the prior art is that, with the disclosed techniques, transaction completions are increased and transaction abandonment by users is reduced. Additionally, with the disclosed techniques, user retention for merchants is improved. Furthermore, hardware resource usage can be decreased in merchant systems as well as security protocol networks. These technical advantages provide one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
FIG. 1 is a block diagram illustrating a networked environment configured to implement one or more aspects of the present embodiments;
FIG. 2 is an illustration of exemplary operations of the authentication optimization service of FIG. 1, according to various embodiments;
FIG. 3 is an illustration of exemplary operations of the model selection service and model training service of FIG. 1, according to various embodiments;
FIG. 4 is an illustration of exemplary operations of the model feature service of FIG. 1, according to various embodiments;
FIG. 5 is an illustration of modules of the authentication optimization service of FIG. 1, according to various embodiments;
FIG. 6A illustrates a flow diagram of method steps for generating security protocol decisions for authentication security protocols, according to various embodiments;
FIG. 6B illustrates a flow diagram of method steps for training a security decision model, according to various embodiments;
FIG. 7 is a block diagram illustrating a computing device configured to implement one or more aspects of the present embodiments.

### DETAILED DESCRIPTION

In the following description, numerous specific details are set forth to provide a more thorough understanding of the various embodiments. However, it will be apparent to one of skilled in the art that the inventive concepts may be practiced without one or more of these specific details.

Techniques are disclosed that enable authentication optimization for authentication security protocols. Generally, the techniques involve programmatically performed operations that include receiving request data for a transaction, identifying one or more request features from the request data, generating one or more derived features based on the request features and/or the corresponding request data, encoding the one or more request features and the one or more derived features into a format for a security decision model, and generating, using the security decision model, a security protocol decision based on model features including the one or more request features and the one or more derived features.

At least one technical advantage of the disclosed techniques relative to the prior art is that, with the disclosed techniques, transaction completions are increased. Additionally, with the disclosed techniques, user retention with merchant and other transaction websites is increased. Furthermore, efficiency can be increased and hardware resource usage can be decreased in merchant systems as well as security protocol networks, relative to systems that utilize security protocols as a default and/or static course. Furthermore, the use of one or more programmatically-selected derived features that are not directly included in request data provides further benefits. These technical advantages provide one or more technological improvements over prior art approaches.

### Exemplary Networked Environment

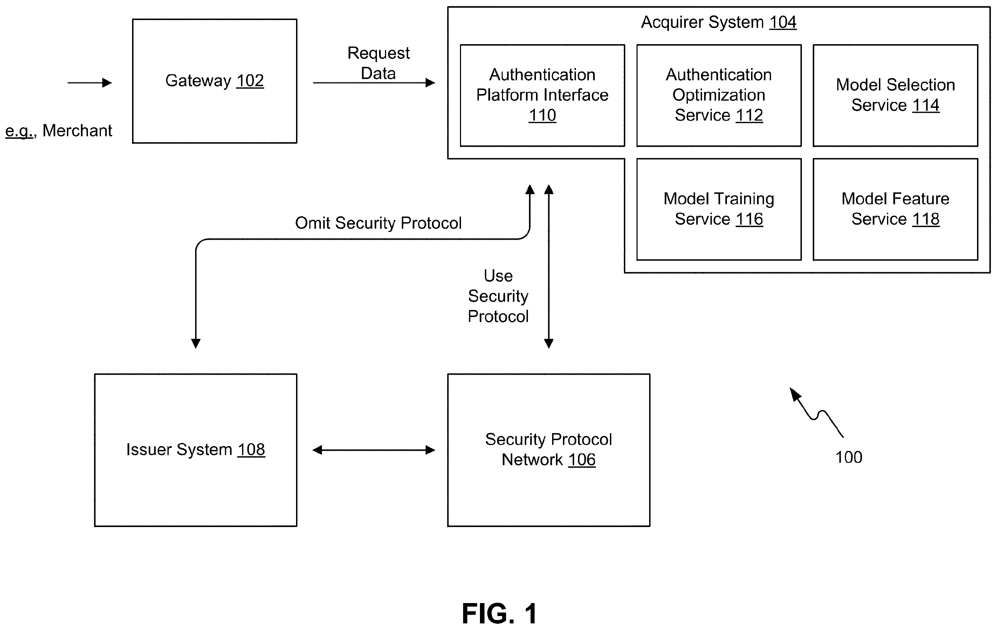

FIG. 1 is a block diagram illustrating a networked environment 100 configured to implement one or more aspects of the present embodiments. The networked environment 100 includes, without limitation, a gateway 102, an acquirer system 104, a security protocol network 106, and an issuer system 108. The acquirer system 104 includes, without limitation, an authentication platform interface 110, an authentication optimization service 112, a model selection service 114, a model training service 116, and a model feature service 118, which communicate using a network that includes any technically feasible type of communications network that allows data to be exchanged.

The gateway 102 includes one or more servers and/or other computing devices or systems that enable merchants and other enterprises to process and manage transactions from customers. In various examples, transactions include information transactions, item purchases, service purchases, other financial transactions, and/or the like. A merchant accesses the gateway 102 using a client device such as a mobile device, a tablet device, a computer device, server device, point-of-sale device, and/or the like. A merchant device or system connects to the gateway 102, for example, using one or more programmatic interfaces such as application programming interfaces for online transactions. The gateway 102 identifies request data for a transaction based on the data and communications received from the merchant. The request data includes one or more of user data associated with the user, identifying information about the merchant, payment data, order data, time data, and/or the like. As one example, the request data 202 includes user data user data such as a payment identifier, an order code, a route identifier, a source timestamp, a response code, an acquirer code, an acquire country, an expiry date, a customer interaction, a card issue country, a country code, an authentication scheme or security protocol identifier, a card Bank Identification Number (BIN), a merchant initiation code, a stored credential code, a transaction amount, a currency code, an administration code, a risk level, a merchant identifier, a business vertical identifier for the item or the merchant, and/or the like.

In some embodiments, the gateway 102 identifies at least a portion of the request data from a browser or other application through which the user interacts with the gateway 102. For example, the gateway 102 can perform device data collection that collects information about a user's environment such as Internet Protocol address, browser type, operating system, screen resolution, location data, time zone, time, unique device identifiers, cookies, cookie identifiers, sensor data from sensors associated with the user's device, browser attributes such as user agent, size, and/or the like. In some examples, the gateway 102 or a module of the gateway 102 is provided by the acquirer system 104 or an entity that administers the acquirer system 104.

The acquirer system 104 includes one or more servers and/or other computing devices or systems that provide tools and services to interact with various issuer systems 108 and security protocol networks 106. The acquirer system 104 can acquire information used to complete transactions that involve the merchant and an issuer system 108, enabling a transaction to be processed and completed based on the request data for the transaction. The acquirer system 104 includes an authentication platform interface 110. The authentication platform interface 110 includes an application programming interface or other programmatic interface through which the gateway 102 communicates data with the acquirer system 104. For example, the authentication platform interface 110 receives the request data from the gateway 102. The authentication platform interface 110 provides all or a subset of the request data to the authentication optimization service 112.

The authentication optimization service 112 makes security protocol decisions such as whether or not to use an authentication security protocol (e.g., standard 3DS2 or 3DS data only) and/or which 3DS type to use as between standard 3DS2, 3DS data only, and/or the like. The authentication optimization service 112 includes one or more security decision models, such as one or more machine learning models. The authentication optimization service 112 includes one or more modules that operate in conjunction with the one or more machine learning models to generate security protocol decisions based on request data, model data, and other information. For example, the authentication optimization service 112 identifies and validates request data, identifies at least a subset of the request data as model features, augments the model features to include derived features that are derived based on the request data, encodes the model features, and generates a security protocol decision. In some embodiments, the authentication optimization service 112 also determines which authentication security protocol to use, such as 3DS2 standard or 3DS data only, and determines which fields or subsets of request data to utilize, such as which fields and field values to send and/or drop. In further embodiments, the authentication optimization service 112 also determines whether to use frictionless or step-up authentication procedures of the authentication security protocol. Identifying, generating, training, and otherwise utilizing a security decision model based on features such as request features, derived features, and additional features provides an unconventional approach that optimizes the use of authentication security protocols relative to traditional systems.

The model selection service 114 is a module of the acquirer system 104 that evaluates a number of different candidate security decision models to determine which candidate security decision model is to be used. The candidate security decision models include machine learning models and/or rule-based models. In some examples, candidate security decision models include regression models, tree-based models, neural networks, and/or a combination of the foregoing. The regression models include linear, non-linear regression models, and/or the like. The tree-based models include decision trees, random forests, gradient boosting decision tree models, and/or the like. The neural networks include multiple-layer perceptron networks, artificial neural networks, convolutional neural networks, and/or the like. In some embodiments the model selection service 114 selects the candidate security decision model for a particular merchant, geographical region, user, group of users, and/or the like. The model selection service 114 provides a number of example requests (and corresponding request data) from a selection dataset as inputs and identifies a number of security protocol decisions. The model selection service 114 identifies a candidate security decision model that has a lowest variance from ground truth security protocol decisions (and/or other target variables) in the selection dataset. In some examples, the candidate security decision models are ranked according to variance from ground truth, and those with the lowest variance (e.g., below a threshold variance) and/or up to a predetermined number of the candidate security decision models are selected. In some examples, the model selection service 114 selects one or more of the candidate security decision models based on other feasibility criteria. In some embodiments, the model selection service 114 selects a gradient boosting decision tree model.

The model training service 116 trains one or more security decision models using a training dataset. The model training service 116 also performs hyper-parameter tuning. In some embodiments, the model training service 116 performs unsupervised and/or supervised training of the one or more security decision models. The training dataset includes a number of example requests (and corresponding request data), as well as ground truth security protocol decisions. In various embodiments, the training dataset and the selection dataset can include at least one shared example request. However, the training dataset and the selection dataset can also include completely different sets of example requests and ground truth security protocol decisions. In examples where multiple security decision models are trained, the candidate security decision models are reevaluated by the model selection service 114, and the trained security decision model that has a lowest variance from ground truth is selected as a security decision model for the authentication optimization service 112 to use for security protocol decisions. In some embodiments, the model training service 116 re-trains the security decision model periodically and/or in response to one or more events. Model training trigger events include manual requests, a programmatically detected update to countries or regions that require a particular authentication security protocol, a programmatically detected update to a regional security threat level (e.g., beyond a threshold), and/or the like.

The model feature service 118 performs feature selection that identifies features to use as inputs to the selected security decision model. In various embodiments, feature selection is additionally or alternatively performed prior to the selection of a security decision model. The model feature service 118 involves supervised and/or unsupervised feature selection, as well as dimensional reduction techniques such as principal component analysis.

The security protocol network 106 is a network operated by an entity that provides authentication security protocol services such as 3DS authentication. The security protocol network 106 includes one or more servers and/or other computing devices or systems. The security protocol network 106 operates as a connector between the acquirer system 104 and the issuer system 108. The security protocol network 106 performs an authentication process according to authentication security protocol. The authentication process can include deciding whether or not to prompt the user to complete an authentication challenge, for example, by transmitting a challenge or step-up for the user to complete.

The issuer system 108 includes one or more servers and/or other computing devices or systems. The issuer system 108 is operated by an issuer that issues cards that provide identification and/or payment capabilities to a user. The issuer system 108 makes authorization decisions for transactions based on data received from the security protocol network 106 and/or the acquirer system 104.

In one example of the operation of the networked environment 100, the gateway 102 transmits request data to the authentication platform interface 110 of the acquirer system 110. For example, the gateway 102 invokes a programmatic interface of the authentication platform interface 110 using parameters that include the request data, or otherwise transmits the request data to the authentication platform interface 110. The authentication platform interface 110 forwards, stores, or otherwise provides the request data to the authentication optimization service 112. The authentication optimization service 112 receives, retrieves, or otherwise identifies the request data. The authentication optimization service 112 uses the request data as one or more inputs into a security decision model (and/or other program modules) to generate security protocol decision such as whether or not to use an authentication security protocol. If the authentication optimization service 112 determines to use the authentication security protocol for the transaction, the authentication optimization service 112 transmits at least a subset of the request data to the security protocol network 106. The security protocol network 106 performs authentication according to the authentication security protocol to facilitate completion of the transaction. However, if the authentication optimization service 112 determines not to use (e.g., to omit or bypass) the authentication security protocol, the authentication optimization service 112 transmits at least a subset of the request data to the issuer system 108 to facilitate completion of the transaction. In some examples, the path indicated as 'omit security protocol' includes or utilizes a payment processing network that facilitates transaction completion in association with an issuer system 108 (and/or the acquirer system 108). In some embodiments, the authentication optimization service 112 transmits the at least the subset of the request data to the issuer system 108 via the payment processing network in a manner that bypasses the authentication security protocol. In an instance in which the payment processing network includes or provides the security protocol network 106, the authentication optimization service 112 transmits the at least the subset of the request data to a particular programmatic interface that bypasses the authentication security protocol and/or transmits the at least the subset of the request data with an indication to bypass the authentication security protocol.

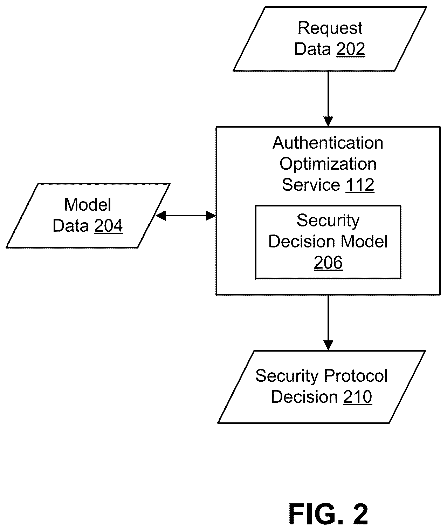

FIG. 2 is an illustration of exemplary operations of the authentication optimization service 112 of FIG. 1, according to various embodiments. The authentication optimization service 112 utilizes data including, without limitation, request data 202 and model data 204. The authentication optimization service 112 includes, without limitation, a security decision model 206.

The authentication optimization service 112 receives request data 202, for example, from a gateway 102 that transmits the request data 202 using a network. The request data 202 corresponds to one or more of user data associated with the user, merchant data associated with the merchant, payment data, order data, time data, and/or the like. As one example, the request data 202 includes user data user data such as a payment identifier, an order code, a route identifier, a source timestamp, a response code, an acquirer code, an acquire country, an expiry date, a customer interaction, a card issue country, a country code, an authentication scheme or protocol identifier, a card Bank Identification Number (BIN), a merchant initiation code, a stored credential code, a transaction amount, a currency code, an administration code, a risk level, a merchant identifier, a business vertical identifier, transaction type (initiated by customer, initiated by merchant, regular e-commerce, recurring e-commerce, etc.), merchant country, cardholder country, merchant category code, and/or the like.

The authentication optimization service 112 retrieves and/or includes model data 204. In some embodiments, the model data 204 includes the security decision model 206 or a most-recently trained or otherwise updated version of the security decision model 206. The model data 204 includes a listing of security protocol enrolled (e.g., 3DS enrolled) card BINS, a listing of countries (e.g., country codes and/or the like) that are in regions or areas where authentication security protocol is mandatory, and an encoder for the security decision model 206. The encoder transforms or otherwise encodes items of the request data 202 and/or at least a portion of the model data 204 into a numerical format that the security decision model 206 utilizes as input.

The security decision model 206 can include a regression model, a tree-based model, a neural network, and/or a combination of the foregoing. The authentication optimization service 112 includes one or more modules that operate in conjunction with the security decision model 206 to generate a security protocol decision based on the request data 202, the model data 204, and other information. For example, the authentication optimization service 112 identifies and validates request data 202, identifies at least a subset of the request data 202 as model features, augments the model features to include derived features that are derived based on the request data 202, augments the model features to include model data 204 such as a listing of 3DS enrolled card BINS and a listing of mandatory-region countries, encodes the model features using an encoder, and generates a security protocol decision.

The authentication optimization service 112 uses the request data 202, the model data 204, and the security decision model 206 to generate a security protocol decision 210. In some embodiments, the security protocol decision 210 indicates which authentication security protocol to use, such as standard 3DS2 or 3DS data only. In further embodiments, the security protocol decision 210 indicates whether to use frictionless or step-up authentication procedures of the authentication security protocol.

In further embodiments, the security protocol decision 210 (or another output from the security decision model 206) includes data field enrichments for request data 202 that is to be provided to the issuer system 108 and/or the security protocol network 106 to complete the transaction. The data field enrichments include modified values for existing fields and/or additional values for added fields or types of data that is to be sent to complete the transaction. The modified and/or additional values can include values for the request data 202, additional security protocol data and other additional data corresponding to any of the features that are included in a transaction completion request. The transaction completion request can be sent to the issuer 108, the security protocol network 106, or intermediate systems associated therewith. In one example, the request data 202 includes and/or omits a challenge preference, and the security protocol decision 210 enriches or augments the transaction completion request to include a particular challenge preference, for example, that security decision model 206 predicts to increase an authorization success rate.

### Exemplary Model Selection and Training

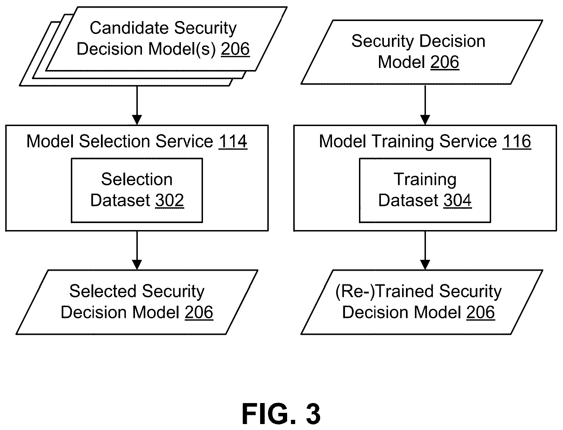

FIG. 3 is an illustration of exemplary operations of the model selection service 114 and model training service 116 of FIG. 1, according to various embodiments. The model selection service 114 includes and/or utilizes, without limitation, a selection dataset 302. The model training service 116 includes and/or utilizes, without limitation, a training dataset 304.

The model selection service 114 receives or otherwise identifies a set of candidate security decision models 206. The model selection service 114 analyzes a respective one of the candidate security decision models 206 using a selection dataset 302. The model selection service 114 evaluates the candidate security decision models 206 and selects one or more selected security decision models 206. In various embodiments, the model selection service 114 selects a particular security decision model 206 to use for security protocol decisions, and/or selects multiple security decision models 206 for (further) training and (re-)evaluation.

In various embodiments, the candidate security decision models 206 include trained and/or untrained security decision models 206. In some examples, candidate security decision models 206 include regression models, tree-based models, neural networks, and/or a combination of the foregoing. The regression models include linear, non-linear regression models, and/or the like. The tree-based models include decision trees, random forests, gradient boosting decision tree models, and/or the like. The neural networks include multiple-layer perceptron networks, artificial neural networks, convolutional neural networks, and/or the like. In some embodiments the model selection service 114 selects the candidate security decision model for a particular merchant, geographical region, user, group of users, and/or the like.

The selection dataset 302 includes a number of example requests and corresponding request data 202. The selection dataset 302 also includes ground truth security protocol decisions that are manually or otherwise verified correct. The model selection service 114 provides an example request and/or corresponding items of request data 202 as inputs to a candidate security decision model 206, and identifies a security protocol decision 210 (not shown). The security protocol decision 210 is compared to a ground truth security protocol decision for the example request, which is included in the selection dataset 302. The analysis is repeated for a number of example requests and for a number of candidate security decision models 206. In some embodiments, the model selection service 114 determines, for each candidate security decision model 206, a value for a metric based on a set of security protocol decisions 210 made by the candidate security decision model 206. The value for the metric indicates a variance from ground truth security protocol decisions (and/or other target variables) in the selection dataset 302. The model selection service 114 identifies one or more candidate security decision models 206 having a lowest variance from ground truth. In some examples, the candidate security decision models 206 are ranked according to variance from ground truth, and those with the lowest variance (e.g., below a threshold variance) and/or up to a predetermined number of the candidate security decision models are the selected security decision models 206. In some examples, the model selection service 114 selects one or more of the candidate security decision models based on other feasibility criteria.

The model training service 116 trains one or more security decision models 206 using a training dataset 304. The model training service 116 also performs hyper-parameter tuning. In some embodiments, the model training service 116 performs supervised and/or unsupervised training of one or more security decision models 206. The model training service 116 generates (re-)trained security decision models 206 using the training dataset 304. The training dataset 304 includes a number of example requests (and corresponding request data 202), as well as ground truth security protocol decisions. In various embodiments, the training dataset 304 and the selection dataset 302 include at least one shared example request. However, the training dataset 304 and the selection dataset 304 can also include completely different sets of example requests and ground truth security protocol decisions. In some embodiments, the model training service 116 (re-)trains (e.g., trains and/or re-trains) the security decision model periodically and/or in response to one or more events. Model training trigger events include manual requests, a programmatically detected update to countries or regions that require a particular authentication security protocol, a programmatically detected update to a regional security threat level (e.g., beyond a threshold), and/or the like.

### Exemplary Model Feature Selection

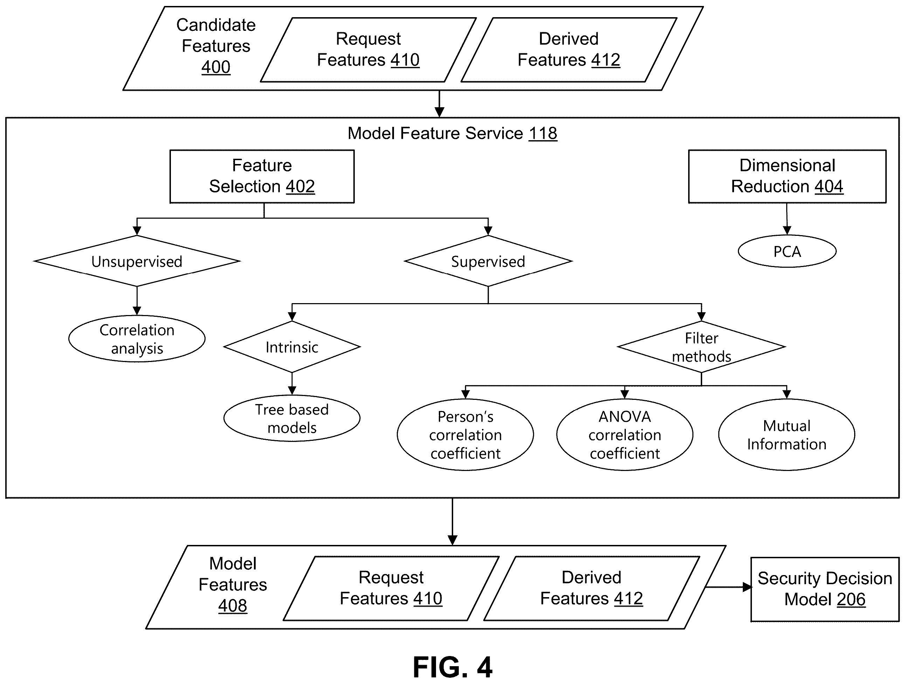

FIG. 4 is an illustration of exemplary operations of the model feature service 118 of FIG. 1, according to various embodiments. The model feature service 118 includes, without limitation, modules including feature selection 402 and dimensional reduction 404. The model feature service 118 utilizes, without limitation, candidate features 400 as inputs. The model feature service 118 generates, without limitation, model features 408. The model features 408 include, without limitation, request features 410 and derived features 412. The model features 408 are used for the security decision model 206.

The candidate features 400 includes types of information related to a transaction request, such as request features 410 corresponding to information in the request data 202. The candidate features 400 also include additional features such as derived features 412 that are generated or generatable based on the information in the request data 202 (e.g., based on request features 410). In some examples, candidate features 400 also include information that is not derived from the request data 202, such as regional and/or global security alerts or statuses from security services. In some embodiments, the request features 410 indicate a transaction time, and derived features 412 include a day of a week of the transaction time, a week of a month of the transaction time, a month of the transaction time, a fiscal or yearly quarter of the transaction time, and other time-based derived features 412. In some embodiments, the request features 410 indicate browser-identified data such as a preferred language and a time zone of the user, and the derived features 412 specify a derived state, country, latitude and longitude, or other geolocation data. Alternatively, the browser-identified data includes a latitude and longitude, and the derived features 412 specify a derived state, country, or other geolocation data. Examples of derived features include one or more features that are mapped to a particular value indicated for a request feature. The model feature service 118 and other applications of the acquirer system 104 can identify one or more values for one or more request features, and use the one or more values to identify a set of one or more derived features based on a mapping. An example of a derived feature includes a historical authentication success rate associated with an individual value or a combination of one or more values for one or more request features. Another example of a derived feature includes an authorization outcome rate or volume count as measured over a certain time window, for each of the previously observed discrete values of the categorical request features directly specified in the request data 202.

In some embodiments, the request data 202 and corresponding request features 410 include address data, browser data, risk data, and additional security protocol data. The address data includes, without limitation, a card address for a card used for the transaction, a billing address for the transaction, a shipping address for the transaction, a cardholder name indicated on the card, a first name of a delivery/service recipient, a last name of a delivery/service recipient, one or more lines of a billing address, a postal code for the billing address, a city for the billing address, a state for the billing address, a country code for the billing address, a telephone number, a shopper email address, and a shopper Internet Protocol address.

The browser data includes, without limitation, a browser language, a value indicating whether Javascript is enabled, a browser color depth (e.g., a number of bits), a browser screen height, a browser screen width, and a time zone.

The risk data includes, without limitation, and authentication timestamp, an authentication method, one or more shopper account event dates, a number of transactions (successful and abandoned) for this shopper account with the merchant across all payment accounts within 24 hours, a number of transactions (successful and abandoned) for this shopper account with the merchant across all payment accounts within a year, a number of purchases with the shopper account during the previous six months or other timespan, a number of add card (payment account) attempts in the last 24 hours, an indication of whether the merchant has experienced suspicious activity (including previous fraud) on the shopper account, an indication of whether the cardholder name on the account is identical to the shipping name used for this transaction, an indication of how long the shopper had the account with the merchant, a length of time since the last change to the shopper's account, the purchase amount total of prepaid or gift card(s), the expected date that the merchandise is available for pre-ordered purchases, a shipping method or type, a delivery timeframe, a delivery email address, an indication of whether the transaction corresponds to a reorder of previously purchased items, an indication of whether the transaction is associated with a future availability and/or future release date, a total count of gift cards purchased. The authentication timestamp indicates a day of the month, a month, a year, and hour, a minute, and a second of the transaction. The authentication method data indicates one or more authentication statuses such as a guest checkout (unauthenticated), or completion of a local account authentication, a federated account authentication, a fast identity online (FIDO) authentication, issuer credential authentication, or third-party authentication. Shopper account event dates (e.g., day/month/year) include one or more of an account creation date, a shopper account modification date, a shopper account password change date, a shopper account shipping address first use date, and/or a shopper account payment account first use date.

The additional security protocol data for the transaction includes, without limitation, a session identifier or other references identifier, a challenge preference (e.g., no preference, prefer/request no challenge, prefer/request challenge, challenge mandated), and a challenge window size.

The model feature service 118 uses feature selection 402 and dimensional reduction 404 modules to identify a subset of the candidate features 400 as model features 408. The model features 408 are features that are used as inputs for the security decision model 206. The model features 408 include one or more of the request features 410, the derived features 412, and/or other ones of the candidate features 400.

The model feature service 118 involves software modules for feature selection 402 as well as dimensional reduction 404. The feature selection 402 includes supervised and unsupervised aspects. The unsupervised aspects of feature selection 402 include unsupervised correlation analysis. The supervised aspects of feature selection 402 include tree based techniques, rule based techniques, regularization techniques, as well as filter methods such as Pearson's correlation coefficient techniques, analysis of variance techniques, and mutual information techniques. The dimensional reduction 404 includes principal component analysis and/or the like.

### Exemplary Security Protocol Decisions

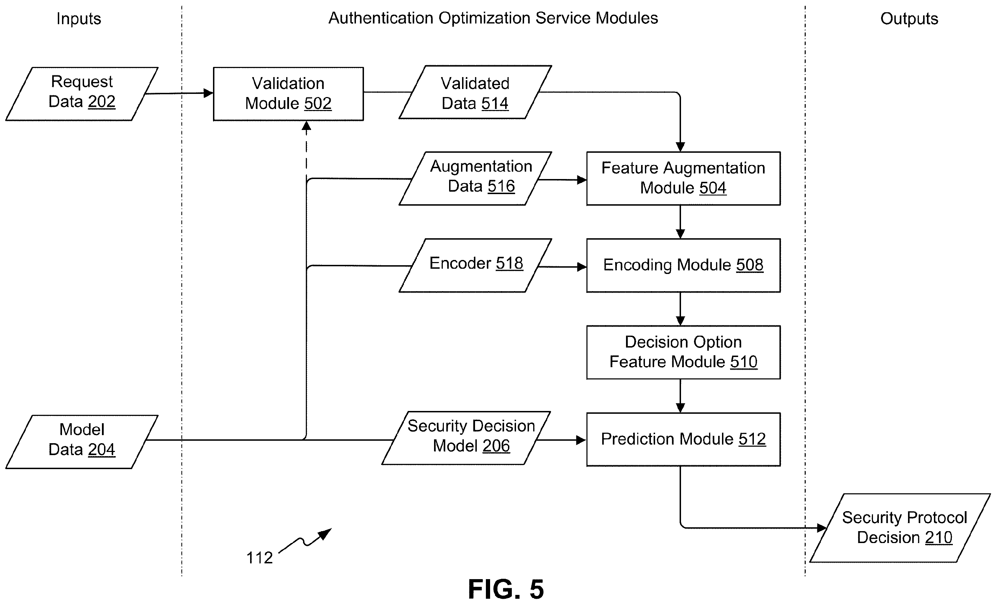

FIG. 5 is an illustration of modules of the authentication optimization service 112 of FIG. 1, according to various embodiments. The authentication optimization service 112 includes, without limitation, a validation module 502, a feature augmentation module 504, an encoding module 508, a decision option feature module 510, and a prediction module 512. Inputs for the authentication optimization service 112 include, without limitation, request data 202 and model data 204. Outputs from the authentication optimization service 112 include, without limitation, the security protocol decision 210. Intermediate data extracted and/or generated by the authentication optimization service 112 includes, without limitation, validated data 514, augmentation data 516, an encoder 518, and a security decision model 206.

The validation module 502 identifies request data 202 and validates at least a subset of the request data 202 to generate validated data 514. The request data 202 includes request features 410. The validated data 514 includes validated versions of the request features 410. In some embodiments, the validation module 502 extracts items of data from the request data 202 that correspond to model features 408. For example, the validation module 502 or another module of the authentication optimization service 112 identifies model features 408 that are specified in the model data 204 as request features 410 and/or derived features 412. The validation module 502 or another module of the authentication optimization service 112 extracts request data 202 corresponding to the model features 408 for validation. Once a validation process is completed, the validation module 502 transmits, stores, or otherwise provides the validated data 514 to the feature augmentation module 504.

The feature augmentation module 504 receives, retrieves, or otherwise obtains the validated data 514. The feature augmentation module 504 also receives, retrieves, or otherwise obtains the augmentation data 514. Augmentation data 514 specifies a set of derived features 412 to generate and/or procedures to generate the derived features 412 using the validated data 514. In some embodiments, the augmentation data 514 includes additional features that are not derived from the validated data 514 (e.g., from the request data 202). The feature augmentation module 504 generates the derived features 412 and extracts or identifies the additional features. The feature augmentation module 504 generates model features 408 by augmenting the validated data 514 (e.g., the validated request features 410) using the derived features 412 and additional features from the augmentation data 514. The augmentation module 504 transmits, stores, or otherwise provides the model features 408 to the encoding module 508.

The encoding module 508 receives, retrieves, or otherwise obtains the model features 408 and the encoder 518. The encoding module 508 receives, retrieves, or otherwise obtains the encoder 518 as part of the model data 204. The encoder 518 transforms or otherwise encodes the model features 408 into a numerical format that the security decision model 206 and/or the prediction module 512 utilizes as input. The encoding module 508 transmits, stores, or otherwise provides encoded versions of the model features 408 to the decision option feature model 510 or the prediction module 512.

In some embodiments, the model features 408 include a card BIN of a card used in the transaction, a weekday of the transaction, a week of the month, a month of the transaction, a merchant code, a merchant category code, an amount or amount bucket (e.g., within a range of amounts corresponding to the bucket) of the transaction, a quarter of the year, an issuer country of an issuer for the transaction, a stored credential usage indicator indicating whether stored credentials are used, a brand code, a currency code, a merchant initiated transaction indicator, an administrator code, an acquirer code, an authentication attempt indicator, a transaction card type (e.g., debit or credit) indicator, an indication of whether a payment scheme or protocol is mandated for the acquirer, an indication of whether a payment scheme or protocol is mandated for the issuer, and/or the like.

The decision option feature module 510 adds a decision option feature to the encoded versions of the model features 408. The decision option feature indicates whether the security decision model 206 is to generate an authorization success rate, such as a value indicating a likelihood of success and/or authorization, for an instance in which the authentication security protocol (e.g., 3DS) is bypassed or an authorization success rate for an instance in which the authentication security protocol is utilized. In some embodiments, a zero "0" for the decision option feature indicates that the security decision model 206 is to have a decision to bypass security protocol, and a one "1" for the decision option feature indicates that the security decision model 206 is to have a decision to utilize the security protocol. In some embodiments, the decision option feature module 510 adds a zero "0" in a first instance of the encoded model features 408, and adds a one "1" in a second instance of the encoded model data 204. Alternatively, the feature augmentation module 504 adds corresponding decision option feature(s) to the model features 408 prior to encoding.

The prediction module 512 uses the encoded model features 408 as inputs to security decision model 206 to generate authorization success rate(s) and/or a security protocol decision 210. In some embodiments, the prediction module 512 and/or the security decision model 206 identifies a first authorization success rate for an instance in which the authentication security protocol is bypassed, and a second authorization success rate for an instance in which the authentication security protocol is utilized. The prediction module 512 compares the first authorization success rate and the second authorization success rate. If the first authorization success rate is greater than the second authorization success rate then the security protocol decision 210 indicates to bypass or omit the authentication security protocol. However, if the second first authorization success rate is greater than the first authorization success rate then the security protocol decision 210 indicates to utilize the authentication security protocol.

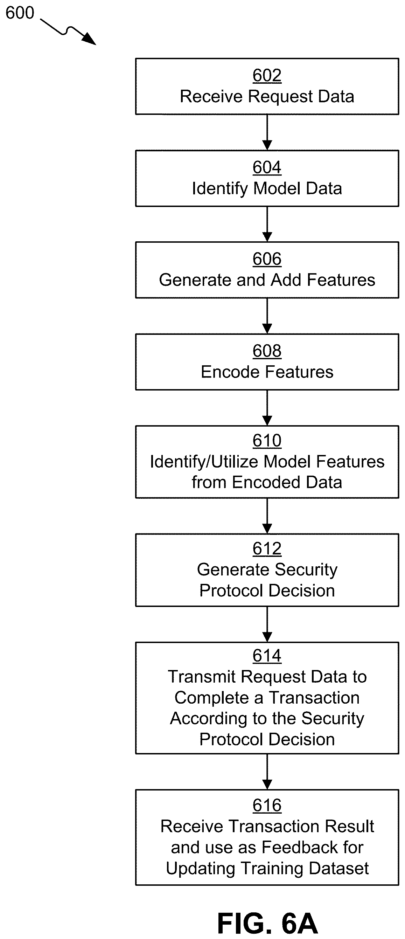

FIG. 6A illustrates a flow diagram of method steps for generating security protocol decisions for authentication security protocols, according to various embodiments. Although the method steps are shown in an order, persons skilled in the art will understand that some method steps may be performed in a different order, repeated, omitted, and/or performed by components other than those described in Figure 6A. Although the method steps are described with respect to the systems of Figures 1-5 and 7, persons skilled in the art will understand that any system configured to perform the method steps, in any order, falls within the scope of the various embodiments.

As shown, a method 600 begins at step 602, where the authentication optimization service 112 receives request data 202. For example, the gateway 102 transmits request data 202 to the authentication platform interface 110 of the acquirer system 110. The authentication platform interface 110 forwards, stores, or otherwise provides the request data 202 to the authentication optimization service 112. The authentication optimization service 112 receives, retrieves, or otherwise identifies the request data 202. The request data 202 corresponds to a transaction request. The request data 202 includes one or more of user data associated with the user, merchant data associated with the merchant, payment data, order data, time data, and/or the like. As one example, the request data 202 includes a payment identifier, an order code, a route identifier, a source timestamp, a response code, an acquirer code, an acquire country, an expiry date, a customer interaction, a card issue country, a country code, an authentication scheme or protocol identifier, a card Bank Identification Number (BIN), a merchant initiation code, a stored credential code, a transaction amount, a currency code, an administration code, a risk level, a merchant identifier, a business vertical identifier, and/or the like.

At step 604, the authentication optimization service 112 identifies model data 204. The authentication optimization service 112 includes model data 204, and/or retrieves model data 204 from a datastore. In some embodiments, the model data 204 includes the security decision model 206 or a most-recently trained or otherwise updated version of the security decision model 206. The model data 204 includes a listing of security protocol enrolled (e.g., 3DS enrolled) card BINS, a listing of countries (e..g., country codes and/or the like) that are in regions or areas where authentication security protocol is mandatory, an encoder for the security decision model 206, and the decision model 206 itself. The encoder transforms or otherwise encodes items of the request data 202 and/or at least a portion of the model data 204 into a numerical format that the security decision model 206 utilizes as input.

At step 606, the authentication optimization service 112 generates and/or adds model features 408 to those corresponding to the request data 202. The additional model features 408 include derived features 412. The derived features 412 are generated based on the information in the request data 202 and/or the model data 204. In some examples, the authentication optimization service 112 identifies and/or extracts a subset of the request data 202 corresponding to model features 408 (e.g., identified in the model data 204) to generate the derived features 412. The added model features 408 also include features that are included in the model data 204 such as a listing of security protocol enrolled card BINS, and a listing of countries that are in regions or areas where authentication security protocol is mandatory. In some examples, the authentication optimization service 112 adds one or more decision option features. The one or more decision option features can be added prior to encoding or after encoding the model features 408.

At step 608, the authentication optimization service 112 encodes data including the model features 408 (e.g., request data 202) for use by the security decision model 206. The authentication optimization service 112 transforms or otherwise encodes the model features 408 into encoded data having a format that the security decision model 206 utilizes as input. In some embodiments, the authentication optimization service 112 transforms all or a portion of the request data 202 into encoded request data 202.

At step 610, the authentication optimization service 112 identifies model features 408 in the encoded data. The authentication optimization service 112 extracts items or features from the encoded data (e.g., encoded request data 202) that correspond to model features 408. For example, the authentication optimization service 112 identifies model features 408 that are specified in the model data 204 as request features 410 and/or related to derived features 412. The authentication optimization service 112 extracts and/or otherwise utilizes, from the encoded request data 202, request features 410 corresponding to the model features 408.

At step 612, the authentication optimization service 112 generates a security protocol decision 210. The authentication optimization service 112 generates the security protocol decision 210 based on the encoded model features 408. For example, the authentication optimization service 112 uses the encoded model features 408, including those extracted from or derived from the request data 202, as one or more inputs into a security decision model 206. The security decision model 206 outputs that indicate whether or not to use an authentication security protocol.

In some embodiments, the authentication optimization service 112 uses the security decision model 206 to identify a first authorization success rate for an instance in which the authentication security protocol is bypassed, and a second authorization success rate for an instance in which the authentication security protocol is utilized. The authentication optimization service 112 compares the first authorization success rate and the second authorization success rate. If the first authorization success rate is greater than the second authorization success rate then the authentication optimization service 112 generates a security protocol decision 210 that indicates to bypass or omit the authentication security protocol. However, if the second first authorization success rate is greater than the first authorization success rate then the security protocol decision 210 indicates to utilize the authentication security protocol. In some embodiments, authentication optimization service 112 uses the security decision model 206 to enrich or argument a transaction completion request with modified and/or additional data.

At step 614, the authentication optimization service 112 transmits request data 202 to complete or facilitate a transaction according to the security protocol decision 210. The authentication optimization service 112 transmits a transaction completion request to the security protocol network 106 and/or the issuer system 108 to complete a transaction. For example, if the security protocol decision 210 indicates to use the authentication security protocol for the transaction, the authentication optimization service 112 transmits at least a subset of the request data 202 to the security protocol network 106.

The security protocol network 106 performs authentication according to the authentication security protocol to facilitate completion of the transaction. However, if the security protocol decision 210 indicates to omit or bypass the authentication security protocol, the authentication optimization service 112 transmits at least a subset of the request data 202 to the issuer system 108 to facilitate completion of the transaction.

At step 616, the authentication optimization service 112 receives transaction results, for example, from the gateway 102, a merchant device, and/or the issuer system 108. The authentication optimization service 112 uses the transaction results as feedback data to update a training dataset 304. For example, the authentication optimization service 112 identifies transaction results and other data for the transaction and generates an example request, which includes ground truth based on the transaction result. In some examples, the training example can indicate that the security protocol decision 210 in the example is correct in an instance in which the transaction result indicates the transaction was completed. In some examples, the training example can indicate that the security protocol decision 210 in the example is incorrect in an instance in which the transaction result indicates the transaction was abandoned. The authentication optimization service 112 and/or the model training service 116 updates a training dataset 304 to include the example request.

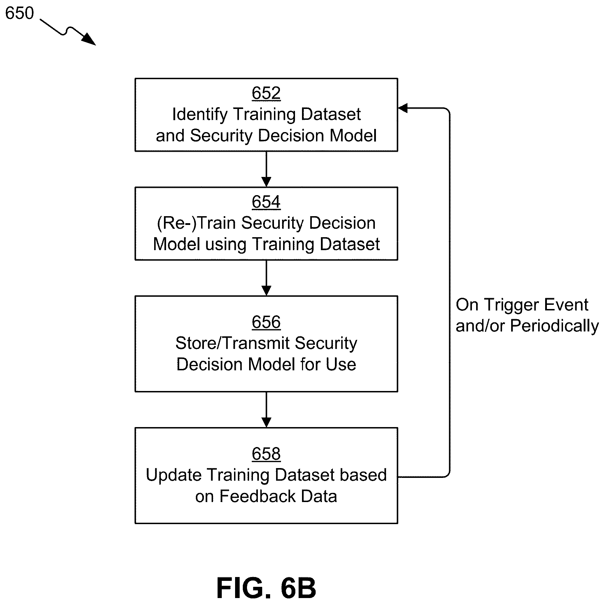

FIG. 6B illustrates a flow diagram of method steps for training a security decision model 206, according to various embodiments. Although the method steps are shown in an order, persons skilled in the art will understand that some method steps may be performed in a different order, repeated, omitted, and/or performed by components other than those described in Figure 6B. Although the method steps are described with respect to the systems of Figures 1-5 and 7, persons skilled in the art will understand that any system configured to perform the method steps, in any order, falls within the scope of the various embodiments.

As shown, a method 650 begins at step 652, where the model training service 116 identifies a training dataset 304. The model training service 116 also identifies a security decision model 206. The model training service 116 can map certain security decision models 206 to certain training datasets 304. In some examples, the model training service 116 identifies the training dataset 304 based on the security decision model 206. Additionally or alternatively, the model training service 116 identifies the security decision model 206 based on the training dataset 304. In some embodiments, the model training service 116 identifies a most-recent version of the training dataset 304 and/or the security decision model 206.

At step 654, the model training service 116 (re-)trains the security decision model 206 using the training dataset 304. The model training service 116 can trains one or more security decision models 206 using a single training dataset 304. The model training service 116 also performs hyper-parameter tuning. In some embodiments, the model training service 116 performs supervised and/or unsupervised training of one or more security decision models 206. The model training service 116 generates (re-)trained security decision models 206 based on the training dataset 304, for example, to minimize a loss function.

At step 656, the model training service 116 stores and/or transmits the security decision model 206 for use by the authentication optimization service 112. For example, the model training service 116 stores security decision model 206 in a particular datastore and/or in a particular location of a datastore from which the authentication optimization service 112 retrieves and/or identifies the most recent security decision model 206.

At step 658, the model training service 116 updates a training dataset 304 based on feedback data. The feedback data includes transaction results for a particular transaction. The transaction results are received, for example, from the gateway 102, a merchant device, and/or the issuer system 108. For example, the authentication optimization service 112 uses the transaction results to generate feedback data that includes transaction results and other data for the transaction and generates an example request, which includes ground truth based on the transaction result. The authentication optimization service 112 stores and/or the model training service 116 updates a training dataset 304 to include the example request.

The model training service 116 repeats the method 650 to (re-)train (e.g., trains and/or re-trains) the security decision model 206 periodically and/or in response to one or more trigger events. The terms train and/or training are also inclusive of retraining. Model training trigger events include manual requests, a programmatically detected update to countries or regions that require a particular authentication security protocol, a programmatically detected update to a regional security threat level (e.g., beyond a threshold), and/or the like.

### Exemplary Device Architectures

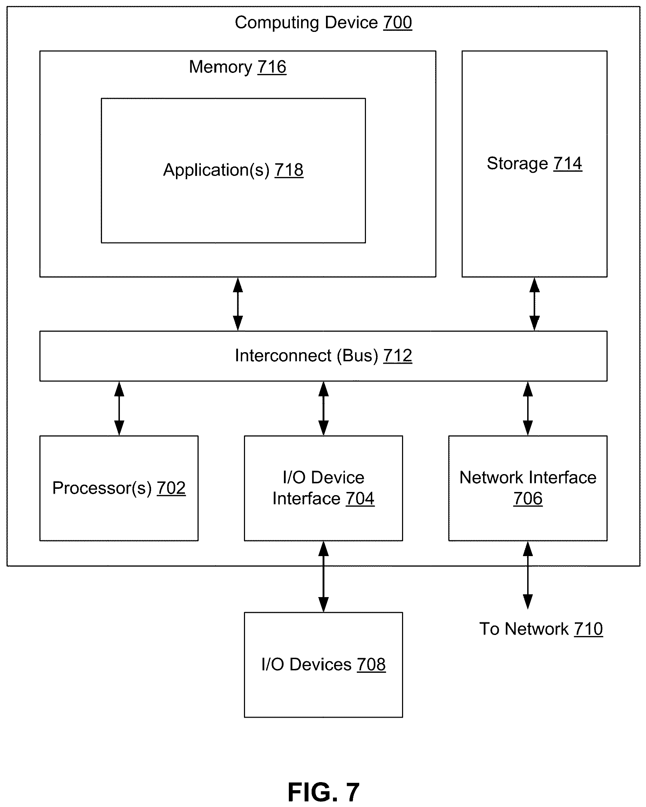

FIG. 7 is a block diagram illustrating a computing device 700 configured to implement one or more aspects of the present embodiments. As shown, computing device 700 includes an interconnect (bus) 712 that connects one or more processing units 702, an input/output (I/O) device interface 704 coupled to one or more input/output (I/O) devices 708, memory 716, a storage 714, and a network interface 706 connected to a network 710.

Computing device 700 includes a server computer, a desktop computer, a laptop computer, a smart phone, a personal digital assistant (PDA), tablet computer, or any other type of computing device configured to receive input, process data, and optionally display images, and is suitable for practicing one or more embodiments. Computing device 700 described herein is illustrative and that any other technically feasible configurations fall within the scope of the present disclosure. Processing unit(s) 702 includes any suitable processor implemented as a central processing unit (CPU), a graphics processing unit (GPU), an application-specific integrated circuit (ASIC), a field programmable gate array (FPGA), an artificial intelligence (AI) accelerator such as a tensor processing unit (TPU), any other type of processing unit, or a combination of different processing units, such as a CPU configured to operate in conjunction with a GPU. In general, processing unit(s) 702 may be any technically feasible hardware unit capable of processing data and/or executing software applications. Further, in the context of this disclosure, the computing elements shown in computing device 700 may correspond to a physical computing system (e.g., a system in a data center) or may be a virtual computing embodiment executing within a computing cloud.

In one embodiment, I/O devices 708 include devices capable of providing input, such as a keyboard, a mouse, a touch-sensitive screen, and so forth, as well as devices capable of providing output, such as a display device. Additionally, I/O devices 708 may include devices capable of both receiving input and providing output, such as a touchscreen, a universal serial bus (USB) port, and so forth. I/O devices 708 may be configured to receive various types of input from an end-user (e.g., a designer) of computing device 700, and to also provide various types of output to the end-user of computing device 700, such as displayed digital images or digital videos or text. In some embodiments, one or more of I/O devices 708 are configured to couple computing device 700 to a network 710.

Network 710 includes any technically feasible type of communications network that allows data to be exchanged between computing device 700 and external entities or devices, such as a web server or another networked computing device. For example, network 710 may include a wide area network (WAN), a local area network (LAN), a wireless (WiFi) network, and/or the Internet, among others.

Storage 714 includes non-volatile storage for applications and data, and may include fixed or removable disk drives, flash memory devices, and CD-ROM, DVD-ROM, Blu-Ray, HD-DVD, or other magnetic, optical, or solid-state storage devices. 3D modeling application 718 and machine learning models 720 may be stored in storage 714 and loaded into memory 716 when executed.

Memory 716 includes a random-access memory (RAM) module, a flash memory unit, or any other type of memory unit or combination thereof. Processing unit(s) 702, I/O device interface 704, and network interface 706 are configured to read data from and write data to memory 716. Memory 716 includes various software programs that can be executed by processing unit(s) 702 and application data associated with said software programs, including the software applications, services, and modules discussed with respect to Figures 1-6.

In sum, techniques are disclosed for authentication optimization services for authentication security protocols. A method includes extracting one or more request features from request data for a transaction, generating one or more derived features based on the request features, encoding the one or more request features and the one or more derived features into a format for a security decision model, and generating, using the security decision model, a security protocol decision based on model features including the one or more request features and the one or more derived features.

At least one technical advantage of the disclosed techniques relative to the prior art is that, with the disclosed techniques, transaction completions are increased. Additionally, with the disclosed techniques, user retention with merchant and other transaction websites is increased. Furthermore, hardware resource usage can be decreased in merchant systems as well as security protocol networks. These technical advantages provide one or more technological improvements over prior art approaches.
1. In some embodiments, one or more non-transitory computer-readable media store program instructions that, when executed by one or more processors, cause the one or more processors to perform a method comprising receiving request data for a transaction, wherein at least a subset of the request data corresponds to one or more request features, generating one or more derived features based on the request features, encoding the one or more request features and the one or more derived features into a format for a security decision model, generating, using the security decision model, a security protocol decision based on model features comprising the one or more request features and the one or more derived features, and transmitting at least a portion of the request data based on the security protocol decision.
2. The one or more non-transitory computer-readable media of clause 1, wherein the security decision model is a machine learning model.
3. The one or more non-transitory computer-readable media of clauses 1 or 2, wherein the request data for the transaction corresponds to one or more of user data associated with the user, merchant data associated with the merchant, payment data, order data, or time data.
4. The one or more non-transitory computer-readable media of any of clauses 1-3, wherein generating a security protocol decision using the security decision model further comprises identifying a first authorization success rate that predicts a likelihood of authorization for an instance in which the security protocol is bypassed, and identifying a second authorization success rate that predicts a likelihood of authorization for an instance in which the authentication security protocol is utilized, wherein the security protocol decision is generated based on a comparison between the first authorization success rate and the second authorization success rate.
5. The one or more non-transitory computer-readable media of any of clauses 1-4, wherein the method further comprises identifying one or more features that indicate a set of card bank identification numbers that are enrolled in association with the security protocol, wherein the model features for the security decision model include the one or more features.
6. The one or more non-transitory computer-readable media of any of clauses 1-5, wherein the security protocol decision indicates to bypass the security protocol decision and the at least the portion of the request data is transmitted to an issuer to facilitate the transaction.
7. The one or more non-transitory computer-readable media of any of clauses 1-6, wherein the security protocol decision indicates to utilize the security protocol decision and the at least the portion of the request data is transmitted to a security protocol network to facilitate the transaction.
8. In some embodiments, a system comprises a memory that stores instructions, and a processor that is coupled to the memory and, when executing the instructions, is configured to generate one or more derived features based on one or more request features, the one or more request features corresponding to at least a subset of request data for a transaction, encode the one or more request features and the one or more derived features into a format for a security decision model, generate, using the security decision model, a security protocol decision based on model features comprising the one or more request features and the one or more derived features, and transmit at least a portion of the request data based on the security protocol decision.
9. The system of clause 8, wherein the security decision model is a machine learning model.
10. The system of clauses 8 or 9, wherein the request data for the transaction corresponds to one or more of user data associated with the user, merchant data associated with the merchant, payment data, order data, or time data.
11. The system of any of clauses 8-10, wherein the processor is further configured to identify a first authorization success rate that predicts a likelihood of authorization for an instance in which the security protocol is bypassed, and identify a second authorization success rate that predicts a likelihood of authorization for an instance in which the authentication security protocol is utilized, wherein the security protocol decision is generated based on a comparison between the first authorization success rate and the second authorization success rate.
12. The system of any of clauses 8-11, wherein the processor is further configured to identify one or more features that indicate a set of card bank identification numbers that are enrolled in association with the security protocol, wherein the model features for the security decision model include the one or more features.
13. The system of any of clauses 8-12, wherein the security protocol decision indicates to bypass the security protocol decision and the at least the portion of the request data is transmitted to an issuer to facilitate the transaction.
14. The system of any of clauses 8-13, wherein the security protocol decision indicates to utilize the security protocol decision and the at least the portion of the request data is transmitted to a security protocol network to facilitate the transaction.
15. In some embodiments, a method comprises identifying one or more request features corresponding to request data for a transaction, generating one or more derived features based on the one or more request features, encoding the one or more request features and the one or more derived features into a format for a security decision model, and generating, using the security decision model, a security protocol decision based on model features comprising the one or more request features and the one or more derived features.
16. The method of clause 15, further comprising identifying a model training trigger event, and training the security decision model using a training dataset comprising a plurality of example request data for example requests, and ground truth data for the example requests.
17. The method of clauses 15 or 16, wherein the request data for the transaction corresponds to one or more of user data associated with the user, merchant data associated with the merchant, payment data, order data, or time data.
18. The method of any of clauses 15-17, wherein the method further comprises identifying a first authorization success rate that predicts a likelihood of authorization for an instance in which the security protocol is bypassed, and identifying a second authorization success rate that predicts a likelihood of authorization for an instance in which the authentication security protocol is utilized, wherein the security protocol decision is generated based on a comparison between the first authorization success rate and the second authorization success rate.
19. The method of any of clauses 15-18, wherein the method further comprises identifying one or more features that indicate a set of card bank identification numbers that are enrolled in association with the security protocol, wherein the model features for the security decision model include the one or more features.
20. The method of any of clauses 15-19, wherein the security protocol decision indicates to bypass the security protocol decision and at least a portion of the request data is transmitted to an issuer to facilitate the transaction.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, for example, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A system, comprising:
a memory that stores instructions, and
a processor that is coupled to the memory and, when executing the instructions, is configured to:
generate one or more derived features based on one or more request features, the one or more request features corresponding to at least a subset of request data for a transaction;
encode the one or more request features and the one or more derived features into a format for a security decision model;
generate, using the security decision model, a security protocol decision based on model features comprising the one or more request features and the one or more derived features; and
transmit at least a portion of the request data based on the security protocol decision.

2. The system of claim 1, wherein the security decision model is a machine learning model.

3. The system of claim 1 or 2, wherein the request data for the transaction corresponds to one or more of user data associated with the user, merchant data associated with the merchant, payment data, order data, or time data.

4. The system of any of claims 1-3, wherein the processor is further configured to:
identify a first authorization success rate that predicts a likelihood of authorization for an instance in which the security protocol is bypassed; and
identify a second authorization success rate that predicts a likelihood of authorization for an instance in which the authentication security protocol is utilized, wherein the security protocol decision is generated based on a comparison between the first authorization success rate and the second authorization success rate.

5. The system of any of claims 1-4, wherein the processor is further configured to:
identify one or more features that indicate a set of card bank identification numbers that are enrolled in association with the security protocol, wherein the model features for the security decision model include the one or more features.

6. The system of any of claims 1-5, wherein the security protocol decision indicates to bypass the security protocol decision and the at least the portion of the request data is transmitted to an issuer to facilitate the transaction.

7. The system of any of claims 1-6, wherein the security protocol decision indicates to utilize the security protocol decision and the at least the portion of the request data is transmitted to a security protocol network to facilitate the transaction.

8. A method, comprising:
identifying one or more request features corresponding to request data for a transaction;
generating one or more derived features based on the one or more request features;
encoding the one or more request features and the one or more derived features into a format for a security decision model; and
generating, using the security decision model, a security protocol decision based on model features comprising the one or more request features and the one or more derived features.

9. The method of claim 8, further comprising:
identifying a model training trigger event; and
training the security decision model using a training dataset comprising a plurality of example request data for example requests, and ground truth data for the example requests.

10. The method of claim 8 or 9, wherein the request data for the transaction corresponds to one or more of user data associated with the user, merchant data associated with the merchant, payment data, order data, or time data.

11. The method of any of claims 8-10, wherein the method further comprises:
identifying a first authorization success rate that predicts a likelihood of authorization for an instance in which the security protocol is bypassed; and
identifying a second authorization success rate that predicts a likelihood of authorization for an instance in which the authentication security protocol is utilized, wherein the security protocol decision is generated based on a comparison between the first authorization success rate and the second authorization success rate.

12. The method of any of claims 8-11, wherein the method further comprises:
identifying one or more features that indicate a set of card bank identification numbers that are enrolled in association with the security protocol, wherein the model features for the security decision model include the one or more features.

13. The method of any of claims 8-12, wherein the security protocol decision indicates to bypass the security protocol decision and at least a portion of the request data is transmitted to an issuer to facilitate the transaction.

14. One or more non-transitory computer-readable media storing program instructions that, when executed by one or more processors, cause the one or more processors to perform a method comprising:
receiving request data for a transaction, wherein at least a subset of the request data corresponds to one or more request features;
generating one or more derived features based on the request features;
encoding the one or more request features and the one or more derived features into a format for a security decision model;
generating, using the security decision model, a security protocol decision based on model features comprising the one or more request features and the one or more derived features; and
transmitting at least a portion of the request data based on the security protocol decision.

15. The one or more non-transitory computer-readable media of claim 14, wherein the security decision model is a machine learning model.
